# EUROPÄISCHE PATENTSCHRIFT

(11) **EP 1 784 324 B1**
(45) Veröffentlichungstag und Bekanntmachung des Hinweises auf die Patenterteilung: **16.04.2008**
(21) Anmeldenummer: 05772113.6
(22) Anmeldetag: 09.07.2005
(51) Int. Cl.: B60S 1/08, G01N 21/45

(54) **OPTOELEKTRONISCHE SENSOREINRICHTUNG FÜR EIN KRAFTFAHRZEUG**
OPTOELECTRONIC SENSOR DEVICE FOR A MOTOR VEHICLE
SYSTEME DE CAPTEUR OPTOELECTRONIQUE DESTINE A UN VEHICULE

(30) Priorität: 13.07.2004 DE 102004033734
(43) Veröffentlichungstag der Anmeldung: 16.05.2007
(73) Patentinhaber: Leopold Kostal GmbH & Co. KG, 58507 Lüdenscheid (DE)
(72) Erfinder: RICHWIN, Matthias, 44139 Dortmund (DE); WEBER, Thomas, 58513 Lüdenscheid (DE)
(74) Vertreter: Kerkmann, Detlef
(86) Internationale Anmeldenummer: PCT/EP2005/007471
(87) Internationale Veröffentlichungsnummer: WO 2006/005558

(56) Entgegenhaltungen:
- EP-A- 1 431 142
- WO-A-02/06095
- DE-A1- 19 701 258
- DE-A1- 19 720 874
- DE-A1- 19 830 120
- US-A- 4 701 613

## Beschreibung

Die vorliegende Erfindung betrifft eine optoelektronische Sensoreinrichtung für ein Kraftfahrzeug zur Detektion von Feuchtigkeit auf einer Kraftfahrzeugscheibe, mit einem Sender und einem Empfänger für optische Strahlung, welche von der Kraftfahrzeugscheibe in Richtung auf den Empfänger reflektiert wird und mit einem Koppelelement zur Ein- und Auskopplung der optischen Strahlung in die Kraftfahrzeugscheibe, wobei das Koppelelement als Prismenstruktur, bestehend aus einer Vielzahl von Einzelprismen, ausgebildet ist, wobei die Einzelprismen in einem Einkoppelbereich Prismenflächen aufweisen, die senkrecht zur Einfallsrichtung, und die in einem Auskoppelbereich Prismenflächen aufweisen, die senkrecht zur Ausfallsrichtung der optischen Strahlung angeordnet sind.

Ein derartiger Feuchtigkeitssensor ist aus der DE 197 20 874 C2 bekannt und basiert auf dem Funktionsprinzip der gestörten Totalreflektion von infrarotem Licht, welches unter einem Winkel von 45° über eine Optik in die Windschutzscheibe eingekoppelt wird. Bei trockener und sauberer Scheibe wird das Licht an der Scheibenaußenseite total reflektiert und wird unter einem Winkel von ebenfalls 45° über eine zweite Optik von einem Empfänger detektiert. Eine Benetzung der Scheibe koppelt Licht aus dem Strahlengang aus, da an dieser Stelle die Totalreflektion nicht mehr stattfindet.

Problematisch ist der Einfluß von Fremdlicht, der sich bei einer derartigen Sensoranordnung nicht vollständig ausschließen läßt. Fremdlicht kann die Empfindlichkeit des Feuchtigkeitssensors reduzieren oder auch Fehlauslösungen verursachen, so daß eine Fremdlichtreduzierung eine Funktionsverbesserung bedeutet.

Wie theoretische und experimentelle Betrachtungen zeigen, gibt es einen besonderen optischen Pfad, unter dem Fremdlicht von außen durch den Koppelkörper und ein fokussierendes Linsenelement auf dem Empfänger treffen kann. Fremdlicht, das unter bestimmten Winkeln nahe zum Scheibenlot einfällt, kann auf die zum eigentlichen Nutzlicht parallele Flanke der Prismen treffen und an dieser Flanke streifend austreten. Da die Linse auf der Empfängerseite, die das von der Scheibe reflektierte Nutzlicht aufsammelt und auf den Empfänger fokussiert, eine nichtverschwindende Winkelakzeptanz besitzt, und der Empfänger aus einer ausgedehnten Fläche besteht, kann dieses Fremdlicht den Empfänger erreichen.

Daher stellte sich die Aufgabe, eine optoelektronische Sensoreinrichtung für ein Kraftfahrzeug zu schaffen, bei der der Einfluß von durch die Fahrzeugscheibe einfallendem Fremdlicht auf den Empfänger deutlich reduziert ist.

Diese Aufgabe wird erfindungsgemäß erstens dadurch gelöst, daß zumindest im Auskoppelbereich von den weiteren Prismenflächen, die nicht senkrecht zur Strahlungsrichtung angeordnet sind, zumindest einige aufgerauht oder strahlungsundurchlässig gemacht sind.

Die Aufgabe wird erfindungsgemäß zweitens dadurch gelöst, daß zumindest im Auskoppelbereich von den weiteren Prismenflächen, die nicht senkrecht zur Strahlungsrichtung angeordnet sind, zumindest einige nichtparallel zur Ausfallsrichtung der optischen Strahlung angeordnet sind.

Die Aufgabe wird erfindungsgemäß drittens dadurch gelöst, daß zumindest im Auskoppelbereich von den weiteren Prismenflächen, die nicht senkrecht zur Strahlungsrichtung angeordnet sind, zumindest einige mit zusätzlichen Prismen überlagert sind.

Die Erfindung schlägt somit Maßnahmen vor, den Anteil des streifend von Prismenkanten des Koppelelements ausfallenden Fremdlichts zu reduzieren. Dies geschieht durch Aufrauhen oder Abdecken der zum Nutzlicht parallelen Flanken des Koppelkörpers, durch Verkippen der zum Nutzlicht parallelen Flanken des Koppelkörpers oder auch durch eine zusätzliche Ablenkung des streifend ausfallenden Fremdlichts durch dem Koppelelement überlagerte Prismenstrukturen.

Vorteilhafte Ausgestaltungen und Weiterbildungen der Erfindung sind in den Unteransprüchen beschrieben.

Drei mögliche Varianten der Erfindung werden im folgenden anhand der Zeichnung dargestellt und näher erläutert. Es zeigen
- Figur 1: eine erste und eine zweite Ausgestaltung eines Feuchtigkeitssensors,
- Figur 2: eine dritte Ausgestaltung eines Feuchtigkeitssensors,
- Figur 3: das Funktionsprinzip einer optoelektronischen Sensoreinrichtung.

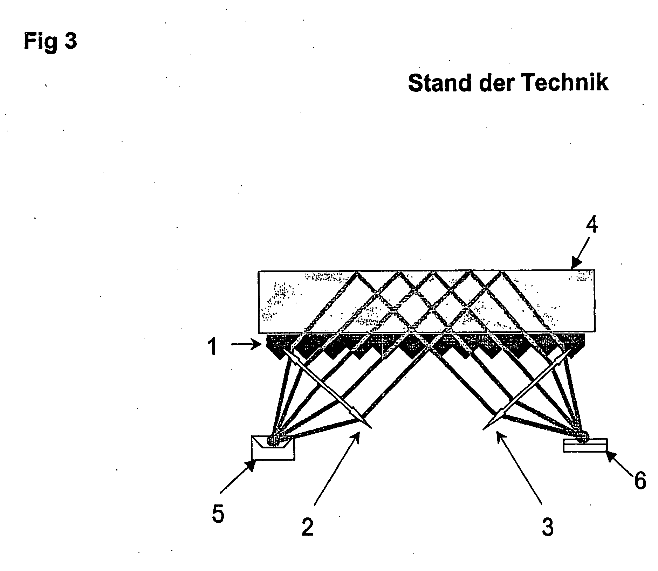

Die Figur 3 zeigt schematisch den Strahlengang bei einer optoelektronischen Sensoreinrichtung, wobei die dargestellte Anordnung in so weit dem vorbekannten Stand der Technik entspricht. Um Regen oder Verschmutzungen auf einer Fahrzeugscheibe (4) eines Kraftfahrzeugs zu sensieren, strahlt eine als Lichtsender (5) wirkende Sende-Diode eine optische Strahlung, vorzugsweise im nahen Infrarotbereich bei einer Wellenlänge von ca. 880 nm, über eine erste Linsenstruktur (2) zur Parallelisierung des Lichtbündels und ein Koppelelement (1) unter einem Winkel von 45° in das Glas der Fahrzeugscheibe (4) ein. An der Außenfläche der Fahrzeugscheibe (4) wird der einfallende Lichtstrahl unter einem Winkel von 45° totalreflektiert und fällt über das Koppelelement (1) und über eine fokussierend wirkende zweite Linsenstruktur (3) auf eine als Lichtempfänger (6) wirkende Foto-Diode.

Befinden sich Regentropfen oder Schmutzteilchen auf der Außenseite der Fahrzeugscheibe (4), so wird an diese Stelle eine Teil der auftreffenden Strahlung aus der Fahrzeugscheibe (4) ausgekoppelt oder absorbiert, was eine Verminderung der von der Foto-Diode (6) empfangenen Strahlungsintensität bewirkt. Diese Intensitätsänderung kann durch eine mit der Foto-Diode verbundene Elektronik, die in der Figur nicht dargestellt ist, leicht registriert werden.

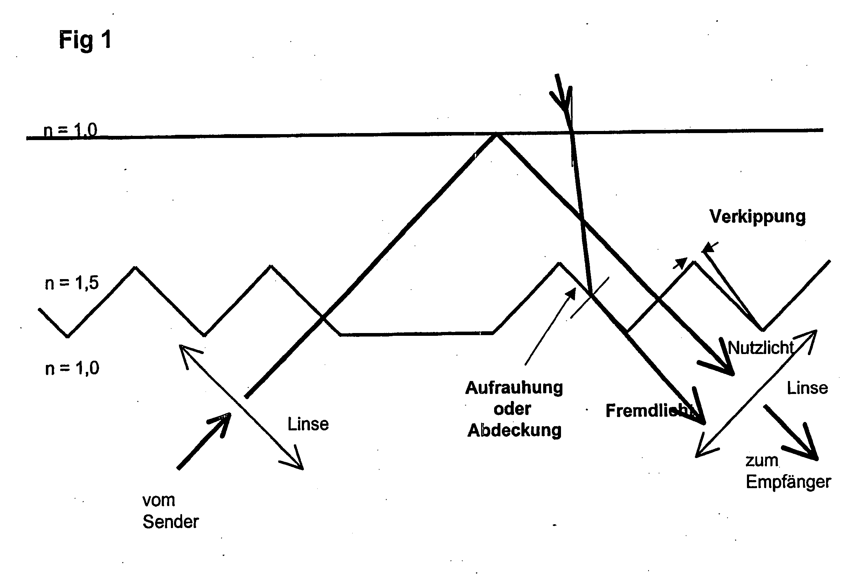

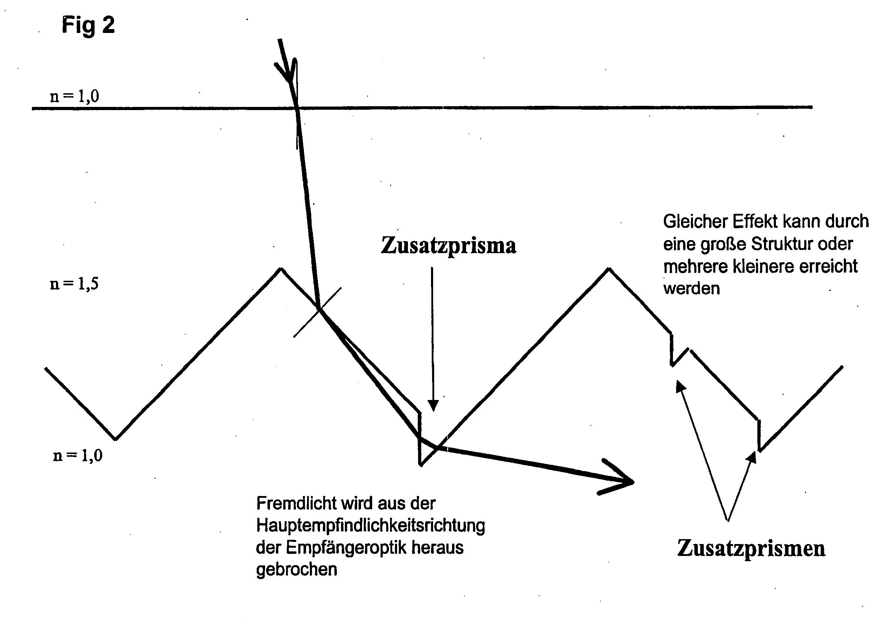

Der dargestellte Stand der Technik löst vor allem das Problem der brechungsfreien Lichteinkopplung in die Fahrzeugscheibe (4). Das hierzu verwendete Koppelelement (1) kann vorteilhafterweise durch eine Folie oder durch einen Kunststoff- oder Glaskörper ausgebildet sein, welcher eine Prismenstruktur aufweist, wobei die Flächen der Prismen genau senkrecht zum eingekoppelten bzw. ausgekoppelten Lichtstrahlenbündel angeordnet sind, wodurch ein brechungsfreier Übergang der Strahlung in den Koppelelement (1) sowie aus dem Koppelelement (1) heraus, erreicht wird. In den Figuren 1 und 2 werden drei erfindungsgemäße Möglichkeiten, die Fremdlichtempfindlichkeit eines Feuchtigkeitssensors zu reduzieren, in einer schematischen Darstellung vorgestellt. Dargestellt ist jeweils die Prismenstruktur des Koppelelements, die Außenfläche der Fahrzeugscheibe, sowie jeweils der empfängerseitige Teil des Strahlengangs.

Die Figur 1 zeigt in einer Darstellung zwei Realisierungen der Erfindung, die jeweils eine fokussierende Empfängeroptik aufweisen. Die Empfängeroptik besitzt wie jede Linse die Eigenschaft, den Winkel der einfallenden Strahlung in einen Ort in der Brennebene zu transformieren. Vom Lichtsender stammende Strahlung, die unter einem Ausfallswinkel von 45° von der Kraftfahrzeugscheibe reflektiert wird, also Nutzlicht, wird dabei auf eine vorgegebene Stelle des Empfängers abgebildet, Fremdlicht aus anderen Winkeln dagegen auf andere Positionen.

Allerdings kann Fremdlicht, das unter bestimmten Winkeln nahe zum Scheibenlot einfällt, auf die zum eigentlichen Nutzlicht parallele Flanke der Prismen treffen und an dieser Flanke streifend austreten. Da die Linse auf der Empfängerseite, die das von der Scheibe reflektierte Nutzlicht aufsammelt und auf den Empfänger fokussiert, eine nichtverschwindende Winkelakzeptanz besitzt, und der Empfänger aus einer ausgedehnten Fläche besteht, kann dieses Fremdlicht den Empfänger erreichen.

Die Empfindlichkeit des Sensorsystems gegen streifend aus der Prismenstruktur austretendes Fremdlicht kann reduziert werden, indem die zum Nutzlicht parallele Flanke der Prismenstruktur aufgerauht oder abgedeckt wird. Bei einer Abdeckung, beispielsweise durch Lackierung oder Beschichtung, wird das streifend ausfallende Fremdlicht absorbiert. Bei einer Aufrauhung, etwa durch Erodier- oder Ätzstrukturen, die in das Spritzwerkzeug eingebracht werden, wird die aus der Flanke austretende Strahlung in alle Raumrichtungen gestreut, so daß der Teil, der innerhalb der Winkelakzeptanz der Linse und somit der Empfängerfläche liegt, reduziert wird. Diese Modifikation der Oberfläche ist nur auf der Empfängerseite notwendig.

Die Empfindlichkeit gegen Fremdlicht kann auch dadurch reduziert werden, daß die Flanke der Prismenstruktur, aus der das Fremdlicht austritt, um wenige Grad (maximal ca. 5°) gegenüber dem Sollwinkel von 45° verkippt wird. Dadurch erhält das Licht, das aus dieser Fläche streifend austritt, genau diesen Winkel zur Hauptakzeptanzrichtung der Empfängeroptik. Die Empfangscharakteristik der Empfängeroptik bevorzugt die Hauptrichtung von 45°, und dämpft Strahlung die unter anderen Winkeln einfällt. Somit erhält man auch eine Dämpfung des Fremdlichtes.

Selbstverständlich kann auch eine Kombination beider Möglichkeiten vorgesehen werden.

Eine weitere Möglichkeit, Fremdlicht, das durch die Prismen des Koppelelement in Richtung auf den Empfänger gebrochen wird zu reduzieren, besteht darin, an die Prismenstruktur des Koppelelements weitere Prismenkanten anzufügen, welche streifend ausfallendes Fremdlicht aus der Empfangsrichtung des Strahlungsempfängers ablenkt. Dem Koppelelement überlagert werden können dabei entweder einzelne große oder auch mehrere kleinere zusätzlichen Prismenkanten. Die zusätzlichen Prismen können weitgehend beliebig geformt sein und müssen insbesondere nicht scharfkantig sein. Die Zusatzprismen können beispielsweise vorteilhaft als Halbzylinder ausgeführt sein.

## Patentansprüche

1. Optoelektronische Sensoreinrichtung für ein Kraftfahrzeug zur Detektion von Feuchtigkeit auf einer Kraftfahrzeugscheibe, mit einem Sender und einem Empfänger für optische Strahlung, welche von der Kraftfahrzeugscheibe in Richtung auf den Empfänger reflektiert wird und mit einem Koppelelement zur Ein- und Auskopplung der optischen Strahlung in die Kraftfahrzeugscheibe, wobei das Koppelelement als Prismenstruktur, bestehend aus einer Vielzahl von Einzelprismen, ausgebildet ist, wobei die Einzelprismen in einem Einkoppelbereich Prismenflächen aufweisen, die senkrecht zur Einfallsrichtung, und die in einem Auskoppelbereich Prismenflächen aufweisen, die senkrecht zur Ausfallsrichtung der optischen Strahlung angeordnet sind,
**dadurch gekennzeichnet,**
**daß** zumindest im Auskoppelbereich von den weiteren Prismenflächen, die nicht senkrecht zur Strahlungsrichtung angeordnet sind, zumindest einige aufgerauht oder strahlungsundurchlässig gemacht sind.

2. Optoelektronische Sensoreinrichtung nach Anspruch 1, **dadurch gekennzeichnet, daß** das Koppelelement aus Kunststoff besteht und zumindest einige Prismenflächen durch Sandstrahlen aufgerauht sind.

3. Optoelektronische Sensoreinrichtung nach Anspruch 1, **dadurch gekennzeichnet, daß** das Koppelelement aus einem spritzgegossenem Kunststoff besteht und zumindest einige Prismenflächen durch Strukturierung im Spritzgußwerkzeug aufgerauht sind.

4. Optoelektronische Sensoreinrichtung nach Anspruch 1, **dadurch gekennzeichnet, daß** zumindest einige Prismenflächen lichtundurchlässig lackiert sind.

5. Optoelektronische Sensoreinrichtung nach Anspruch 1, **dadurch gekennzeichnet, daß** zumindest einige Prismenflächen mit einem lichtundurchlässigen Material beklebt sind.

6. Optoelektronische Sensoreinrichtung nach Anspruch 1, **dadurch gekennzeichnet, daß** zumindest einige Prismenflächen verspiegelt sind.

7. Optoelektronische Sensoreinrichtung für ein Kraftfahrzeug zur Detektion von Feuchtigkeit auf einer Kraftfahrzeugscheibe, mit einem Sender und einem Empfänger für optische Strahlung, welche von der Kraftfahrzeugscheibe in Richtung auf den Empfänger reflektiert wird und mit einem Koppelelement zur Ein- und Auskopplung der optischen Strahlung in die Kraftfahrzeugscheibe, wobei das Koppelelement als Prismenstruktur, bestehend aus einer Vielzahl von Einzelprismen, ausgebildet ist, wobei die Einzelprismen in einem Einkoppelbereich Prismenflächen aufweisen, die senkrecht zur Einfallsrichtung, und die in einem Auskoppelbereich Prismenflächen aufweisen, die senkrecht zur Ausfallsrichtung der optischen Strahlung angeordnet sind,
**dadurch gekennzeichnet,**
**daß** zumindest im Auskoppelbereich von den weiteren Prismenflächen, die nicht senkrecht zur Strahlungsrichtung angeordnet sind, zumindest einige nichtparallel zur Ausfallsrichtung der optischen Strahlung angeordnet sind.

8. Optoelektronische Sensoreinrichtung nach Anspruch 7, **dadurch gekennzeichnet, daß** die Richtungsabweichung der nichtparallel zur Ausfallsrichtung der optischen Strahlung angeordneten Prismenflächen von der Ausfallsrichtung der optischen Strahlung maximal 5° beträgt.

9. Optoelektronische Sensoreinrichtung für ein Kraftfahrzeug zur Detektion von Feuchtigkeit auf einer Kraftfahrzeugscheibe, mit einem Sender und einem Empfänger für optische Strahlung, welche von der Kraftfahrzeugscheibe in Richtung auf den Empfänger reflektiert wird und mit einem Koppelelement zur Ein- und Auskopplung der optischen Strahlung in die Kraftfahrzeugscheibe, wobei das Koppelelement als Prismenstruktur, bestehend aus einer Vielzahl von Einzelprismen, ausgebildet ist, wobei die Einzelprismen in einem Einkoppelbereich Prismenflächen aufweisen, die senkrecht zur Einfallsrichtung, und die in einem Auskoppelbereich Prismenflächen aufweisen, die senkrecht zur Ausfallsrichtung der optischen Strahlung angeordnet sind,
**dadurch gekennzeichnet,**
**daß** zumindest im Auskoppelbereich von den weiteren Prismenflächen, die nicht senkrecht zur Strahlungsrichtung angeordnet sind, zumindest einige mit zusätzlichen Prismen überlagert sind.

10. Optoelektronische Sensoreinrichtung nach Anspruch 9, **dadurch gekennzeichnet, daß** zumindest einige Prismenflächen mit jeweils einem zusätzlichen Prisma überlagert sind.

11. Optoelektronische Sensoreinrichtung nach Anspruch 9, **dadurch gekennzeichnet, daß** zumindest einige Prismenflächen mit jeweils mehreren zusätzlichen Prismen überlagert sind.

12. Optoelektronische Sensoreinrichtung nach einem der vorgenannten Ansprüche, **dadurch gekennzeichnet, daß** die Sensoreinrichtung einen mit der Kraftfahrzeugscheibe verbundenen Regensensor oder Beschlagssensor ausbildet.

## Claims

1. Optoelectronic sensor device for a motor vehicle for the purpose of detecting moisture on a window pane of the motor vehicle, with an emitter and a receptor for the optical radiation which is reflected from the window pane of the motor vehicle in the direction of the receptor, and with a coupling element for the purpose of coupling the optical radiation into and out of the window pane of the motor vehicle, wherein the coupling element is designed as a prismatic structure comprising a plurality of individual prisms with the individual prisms featuring prismatic planes in an in-coupling area which are arranged perpendicular to the direction of incidence, and prismatic planes in an out-coupling area which are arranged perpendicular to the direction of emergence of the optical radiation,
**characterised by the fact**
that at least in the out-coupling area of the other prismatic planes that are not arranged perpendicular to the direction of radiation, at least some of these have been roughened or rendered impervious to radiation.

2. Optoelectronic sensor device in accordance with Claim 1, **characterised by** the fact that the coupling element is made of plastic and at least some of the prismatic planes have been roughened by sand-blasting.

3. Optoelectronic sensor device in accordance with Claim 1, **characterised by** the fact that the coupling element is made of injection-moulded plastic and at least some of the prismatic planes have been roughened by means of structuring in the injection mould.

4. Optoelectronic sensor device in accordance with Claim 1, **characterised by** the fact that at least some of the prismatic planes have been photoresist-painted.

5. Optoelectronic sensor device in accordance with Claim 1, **characterised by** the fact that a photo-resist material has been glued to at least some of the prismatic planes.

6. Optoelectronic sensor device in accordance with Claim 1, **characterised by** the fact that at least some of the prismatic planes are metallised.

7. Optoelectronic sensor device for a motor vehicle for the purpose of detecting moisture on a window pane of the motor vehicle, with an emitter and a receptor for optical radiation which is reflected from the window pane of the motor vehicle in the direction of the receptor, and with a coupling element for the purpose of coupling the optical radiation into and out of the window pane of the motor vehicle, wherein the coupling element is designed as a prismatic structure comprising a plurality of individual prisms, with the individual prisms featuring prismatic planes in an in-coupling area which are perpendicular to the direction of incidence and featuring prismatic planes in an out-coupling area which are arranged perpendicular to the direction of emergence of the optical radiation,
**characterised by the fact**
that, at least in the out-coupling area of the other prismatic planes that are not arranged perpendicular to the direction of radiation, at least some of these are arranged non-parallel to the direction of emergence of the optical radiation.

8. Optoelectronic sensor device in accordance with Claim 7, **characterised by** the fact that the directional variance of the prismatic planes arranged non-parallel to the direction of emergence of the optical radiation is maximum 5° from the direction of emergence of the optical radiation.

9. Optoelectronic sensor device for a motor vehicle for the purpose of detecting moisture on a window pane of the motor vehicle, with an emitter and a receptor for optical radiation which is reflected from the window pane of the motor vehicle in the direction of the receptor, and with a coupling element for the purpose of coupling the optical radiation into and out of the window pane of the motor vehicle, wherein the coupling element is designed as a prismatic structure comprising a plurality of individual prisms, with the individual prisms featuring prismatic planes in an in-coupling area which are perpendicular to the direction of incidence and featuring prismatic planes in an out-coupling area which are arranged perpendicular to the direction of emergence of the optical radiation,
**characterised by the fact**
that, at least in the out-coupling area of the other prismatic planes which are not arranged perpendicular to the direction of radiation, at least some of these are superimposed by supplementary prisms.

10. Optoelectronic sensor device in accordance with Claim 9, **characterised by** the fact that at least some of the prismatic planes are each superimposed by at least one supplementary prism.

11. Optoelectronic sensor device in accordance with Claim 9, **characterised by** the fact that at least some of the prismatic planes are each superimposed by several supplementary prisms.

12. Optoelectronic sensor device in accordance with any of the previously specified claims, **characterised by** the fact that the sensor device constitutes a rain sensor or fogging sensor connected to the window pane of the motor vehicle.

## Revendications

1. Système de détection optoélectronique pour un véhicule automobile pour la détection d'humidité sur la glace d'un véhicule automobile, avec un émetteur et un récepteur pour un rayonnement optique qui est réfléchi par la glace du véhicule automobile en direction du récepteur, et avec un élément de couplage pour le couplage et le découplage du rayonnement optique dans la glace du véhicule automobile, l'élément de couplage étant conçu en tant que structure prismatique, qui consiste en un grand nombre de prismes individuels, les prismes individuels présentant, dans une zone de couplage, des surfaces prismatiques qui sont orientées perpendiculairement à la direction d'incidence, et, dans une zone de découplage, des surfaces prismatiques qui sont orientées perpendiculairement à la direction de sortie du rayonnement optique,
**caractérisé en ce que,**
au moins dans la zone de découplage, au moins quelques-unes des autres surfaces prismatiques, qui ne sont pas disposées perpendiculairement à la direction de rayonnement, sont rugueuses ou imperméables au rayonnement.

2. Système de détection optoélectronique selon la revendication 1, **caractérisé en ce que** l'élément de couplage consiste en matière synthétique et qu'au moins quelques surfaces prismatiques sont rendues rugueuses par décapage au sable.

3. Système de détection optoélectronique selon la revendication 1, **caractérisé en ce que** l'élément de couplage consiste en matière synthétique moulée par injection et que quelques surfaces prismatiques, au moins, sont rendues rugueuses par structuration dans l'outil de moulage par injection.

4. Système de détection optoélectronique selon la revendication 1, **caractérisé en ce que** quelques surfaces prismatiques, au moins, sont rendues imperméables à la lumière par laquage.

5. Système de détection optoélectronique selon la revendication 1, **caractérisé en ce qu'**un revêtement imperméable à la lumière est collé sur au moins quelques surfaces prismatiques.

6. Système de détection optoélectronique selon la revendication 1, **caractérisé en ce que** quelques surfaces prismatiques, au moins, sont métallisés.

7. Système de détection optoélectronique pour un véhicule automobile pour la détection d'humidité sur la glace d'un véhicule automobile, avec un émetteur et un récepteur pour un rayonnement optique qui est réfléchi par la glace du véhicule automobile en direction du récepteur, et avec un élément de couplage pour couplage et découplage du rayonnement optique dans la glace du véhicule automobile, l'élément de couplage étant conçu en tant que structure prismatique, qui consiste en un grand nombre de prismes individuels, les prismes individuels présentant, dans une zone de découplage, des surfaces prismatiques qui sont orientées perpendiculairement à la direction d'incidence, et, dans une zone de découplage, des surfaces prismatiques qui sont orientées perpendiculairement à la direction de sortie du rayonnement optique,
**caractérisé en ce que,**
au moins dans la zone de découplage, au moins quelques-unes des autres surfaces prismatiques, qui ne sont pas disposées perpendiculairement à la direction de sortie du rayonnement optique, ne sont pas disposées parallèlement à la direction de sortie du rayonnement optique.

8. Système de détection optoélectronique selon la revendication 7, **caractérisé en ce que** la direction des surfaces prismatiques, disposées non parallèlement à la direction de sortie du rayonnement optique, diverge au maximum de 5° de la direction de sortie du rayonnement optique.

9. Système de détection optoélectronique pour un véhicule automobile pour la détection d'humidité sur la glace d'un véhicule automobile, avec un émetteur et un récepteur pour un rayonnement optique qui est réfléchi par la glace du véhicule automobile en direction du récepteur, et avec un élément de couplage pour le couplage et le découplage du rayonnement optique dans la glace du véhicule automobile, l'élément de couplage étant conçu en tant que structure prismatique, qui consiste en un grand nombre de prismes individuels, les prismes individuels présentant, dans une zone de couplage, des surfaces prismatiques qui sont orientées perpendiculairement à la direction d'incidence, et, dans une zone de découplage, des surfaces prismatiques qui sont orientées perpendiculairement à la direction de sortie du rayonnement optique,
**caractérisé en ce que,**
au moins dans la zone de découplage, des prismes supplémentaires sont superposés à au moins quelques-unes des autres surfaces prismatiques, qui ne sont pas disposées perpendiculairement à la direction du rayonnement.

10. Système de détection optoélectronique selon la revendication 9, **caractérisé en ce qu'**un prisme supplémentaire est superposé à au moins quelques-unes des surfaces prismatiques.

11. Système de détection optoélectronique selon la revendication 9, **caractérisé en ce que** plusieurs prismes supplémentaires sont superposés à quelques-unes des surfaces prismatiques.

12. Système de détection optoélectronique selon l'une des revendications précédentes, **caractérisé en ce que** le système de détection forme un détecteur de pluie ou un détecteur de buée qui est relié à la glace du véhicule automobile.
